# EUROPÄISCHE PATENTANMELDUNG

(11) **EP 4 079 149 A1**
(43) Veröffentlichungstag der Anmeldung: **26.10.2022**
(21) Anmeldenummer: 22160987.8
(22) Anmeldetag: 09.03.2022
(51) Int. Cl.: A01K 59/04, B04B 13/00

(54) **VERFAHREN ZUM AUSSCHLEUDERN VON HONIGWABEN UND HONIGSCHLEUDER**

(30) Priorität: 22.04.2021 DE 102021002125
(71) Anmelder: Groschopp AG Drives & More, 41747 Viersen (DE)
(72) Erfinder: KLUPP, Alexander, 41812 Erkelenz (DE)
(74) Vertreter: Cohausz & Florack

(57) **Zusammenfassung**

Die Erfindung bezieht sich auf ein Verfahren und eine Honigschleuder zum Ausschleudern von Waben (20) in einem Behälter (2), in dem Waben in Aufnahmen (4) eines drehbaren Korbes (3) mit einer Rotationsachse (6) eingesetzt werden, danach der Korb (3) über einen Motor (9) in Rotation versetzt wird, so dass der Honig aufgrund der Zentrifugalkraft aus den Wabenzellen herausgetrieben wird und an einer Behälterwand (14) zu einer Auslassöffnung (12) herunterrinnt, wo der Honig entnommen wird, und wobei die Drehgeschwindigkeit des Korbes (3) über eine Steuerungseinheit (15) auf einen Wert eingestellt wird, mit dem die Waben durch die auftretende Zentrifugalkraft nicht beschädigt werden. Um die Belastung auf die Waben zu senken und ohne Beschädigung einer Wabe die Zeit der gewünschten Entleerung zu verringern, ist vorgesehen, dass die Masse wenigstens einer Wabe (20) innerhalb des Behälters (3) mittels einer Messvorrichtung (17) ermittelt wird, das Ergebnis an die Steuerungseinheit (15) weitergeleitet wird und die Steuerungseinheit automatisch die Drehgeschwindigkeit über den Motor (9) so einstellt, dass eine kritische Grenze für die Zentrifugalkraft nicht überschritten wird.

## Beschreibung

Die Erfindung betrifft ein Verfahren zum Ausschleudern von Honigwaben in einem Behälter, in dem Waben in Aufnahmen eines drehbaren Korb mit einer Rotationsachse eingesetzt werden, danach der Korb über einen Motor in Rotation versetzt wird, so dass der Honig aufgrund der Zentrifugalkraft aus den Wabenzellen herausgetrieben wird und an einer Behälterwand zu einer Auslassöffnung herunterrinnt, wo der Honig entnommen wird, und wobei die Drehgeschwindigkeit des Korbes über eine Steuerungseinheit auf einen Wert eingestellt wird, mit dem die Waben durch die auftretende Zentrifugalkraft nicht beschädigt werden.

Die Erfindung betrifft ferner eine Honigschleuder, insbesondere zur Durchführung des Verfahrens, mit einem Behälter, in dem ein drehbarer Korb mit Aufnahmen für Honigwaben und einer Rotationsachse über einen Motor in Rotation versetzbar ist, einer Auslassöffnung, aus der der ausgeschleuderte gewonnene Honig entnehmbar ist und einer Steuerungseinheit, mit der die Drehzahl des Motors einstellbar ist.

Honigschleudern werden von unterschiedlichsten Herstellern in verschiedenen Ausführungsformen vertrieben und sind bekannt.

Der Behälter ist in der Regel ein zylindrischer Topf aus Edelstahl mit einem Außendurchmesser zwischen 400 und 1000 mm. Darin befinden sich wenigstens ein sogenannter Korb, der Aufnahmen für eine oder mehrere Waben aufweist. Unter dem Begriff Wabe wird hier die Honigwabe mit ihren Wabenzellen in einem sogenannten Rähmchen verstanden, die der Beute (Bienenstockbehausung) entnommen wurde. Die Rähmchen sind in der Regel aus Holz mit Kantenlängen zwischen 150 und 450 mm und können in der Beute beispielsweise mit weiteren Rähmchen eingesetzt werden. Bienen bauen das Rähmchen mit Hilfe von Bienenwachs zu einer Wabe aus, die die bekannten sechseckigen Wabenzellen aufweisen.

Obwohl es auch manuelle Kurbelantriebe mit Freilauf gibt, beschränkt sich diese Erfindung auf drehbar gelagerte Körbe, die motorisch angetrieben werden. Ihre Rotationsachse ist in der Regel senkrecht.

Bei den Honigschleudern unterscheidet man im Wesentlichen
a) Tangentialschleudern
b) Radialschleudern und
c) Selbstwendeschleudern.

Bei den Tangentialschleudern werden die Waben tangential innerhalb des Korbes in eine Halterung eingebracht. Bei der Rotation des Korbes wird der Honig zunächst nur auf der der Behälterwand zugewandten Seite herausgeschleudert, bis die Wabe von Hand gewendet wird.

Bei der Radialschleuder befinden sich die Waben sternförmig in den Aufnahmen des Korbes und es werden durch die Fliehkräfte beide Seiten der Wabe, also der dort befindlichen Wabenzellen entleert. Dieses Verfahren ist aber anfällig für Wabenbrüche.

Bei der dritten Schleuder schwenkt jede Aufnahme des Korbes von einer radial ausgerichteten Ausgangsstellung je nach Drehrichtung des Korbes um eine Achse bis in eine zumindest nahezu tangentiale Stellung, so dass beide Seiten entleert werden können, wenn man die Drehrichtung des Korbes wechselt.

Zur Begriffserläuterung in dieser Anmeldung wird unter einer Aufnahme ein in der Regel käfigartiges Fach mit einer in der Regel nach oben hin offenen Einsetzöffnung für eine Wabe verstanden, und die Gesamtheit der Aufnahmen befinden sich an einem rotierbaren Korb. Ferner sei unter einer Rotationsachse eine Gerade verstanden, um die sich ein Korb oder eine Aufnahme drehen, während unter einer Drehachse die räumlich ausgebildete Achse oder Welle zu verstehen ist.

Beim Ausschleudern von Honig kann es zu einem Bruch der Waben aufgrund von mechanischer Überlastung kommen. Insbesondere auf volle oder teilentleerte Waben wirken höhere Fliehkräfte. Daher wird die Honigschleuder anfangs in der Regel vorsichtig mit einer geringeren Drehzahl gefahren, die bei den modernsten Honigschleudern an einer Steuereinheit eingestellt werden kann. Wenn die Wabe nahezu entleert ist, wagt der Imker dann eine höhere Drehgeschwindigkeit. Bei den Selbstwendeschleudern ist die Wahl der Drehgeschwindigkeit noch anspruchsvoller.

Hinzu kommt, dass die Viskosität des Honigs und das Gewicht der Waben stark variieren kann, so dass Erfahrungswerte nicht unbedingt übertragbar sind.

Es ist die Aufgabe der Erfindung, die Belastung auf die Waben zu senken und ohne Beschädigung einer Wabe die Zeit der gewünschten Entleerung zu verringern.

Verfahrensmäßig wird die Aufgabe durch die Merkmale des Anspruchs 1 und insbesondere dadurch gelöst, dass die Masse wenigstens einer Wabe innerhalb des Behälters mittels einer Messvorrichtung ermittelt wird, das Ergebnis an die Steuerungseinheit weitergeleitet wird und die Steuerungseinheit automatisch die Drehgeschwindigkeit über den motorischen Antrieb so einstellt, dass eine kritische Grenze für die Zentrifugalkraft nicht überschritten wird.

Als Messvorrichtung werden hier alle technischen Vorrichtungen verstanden, die geeignet sind, die Masse der Wabe zu bestimmen bzw. ihr Gewicht zu messen. Die Messvorrichtung ist zum Messen eines physikalischen Phänomens ausgebildet ist, das mit dem Gewicht von Waben zusammenhängt. Dabei ist die Messvorrichtung in der Lage, das sich beim Ausschleudervorgang verändernde Gewicht zu berücksichtigen. Über die Veränderung der Masse über die Zeit kann der Grad der Entleerung berechnet werden. Bei einer Tangential- oder Selbstwendeschleuder kann so der optimale Zeitpunkt zum Wenden, beziehungswiese das Ende des Schleudervorgangs ermittelt werden. Neben der Schonung der Waben kommt es zu einer Verkürzung der benötigten Zeit und somit zu einer Einsparung von Kosten durch eine effizientere Nutzung der Schleuder.

Es ist vorteilhaft, wenn eine Massenänderung von wenigstens zwei Waben ermittelt wird.

Wenn man bei mehreren Waben die Massenreduktion während des Schleuderprozesses ermittelt, können Rückschlüsse darüber gewonnen werden, ob sich die Waben ungleichmäßig entleeren.

Mit besonderem Vorteil wird die Masse aller Waben vor und/oder während und/oder nach dem Schleudervorgang ermittelt.

Auf diese Weise erhält man nicht nur das Gewicht der einzelnen Waben und kann ständig die Abnahme des Gewichts durch den ausgeschleuderten Honig ermitteln, sondern man erhält auch Erkenntnisse über eine Massenverteilung auf dem Umfang des Korbes. Dadurch kann in der Steuerung eine bestehende Unwucht des Korbes ermittelt werden und um die Lager des Korbes mit senkrechter Rotationsachse, beispielweise einer in Lagern gelagerten Drehachse, zu schonen, kann bei Ermittlung einer solchen Unwucht ebenfalls die Drehzahl angepasst werden, um zu große Schläge zu vermeiden.

Es ist bevorzugt, wenn die Masse während des Schleudervorgangs ständig über wenigstens einen Gewichtssensor ermittelt wird.

Die erste praktikable Methode ist also eine direkte Messung einer oder mehrerer Wabengewichte. Die Abnahme des Gewichtes während des Schleudervorgangs gibt Aufschluss darüber, wie viel Honig bereits aus den Wabenzellen herausgeschleudert wurde. Der Gewichtssensor kann durch einen Kraft- oder Drucksensor gebildet werden, auf dem sich die Wabe abstützt. Vorteilhaft ist es dann, die Messwerte drahtlos an die Steuereinheit zu übertragen.

Alternativ oder zusätzlich ist bevorzugt, wenn die Masse bei einer Selbstwendeschleuder über die Winkelveränderung der Aufnahme in Abhängigkeit von der Drehzahl erfasst wird.

Dies ist ebenfalls eine sehr einfache Methode zur Gewichtserfassung, die allerdings nur bei Selbstwendeschleudern einsetzbar ist. Die Aufnahme steht im Stillstand radial im Behälter. Mit steigender Drehzahl wird die Aufnahme um eine senkrechte Rotations- bzw. Drehachse gegen eine rücksetzende Rückstelleinrichtung (in der Regel eine Feder oder ein Elastomer) gedreht. Aus dem gemessenen Drehwinkel bei einer bestimmten Rotationsgeschwindigkeit des Korbes kann das Gewicht der Wabe errechnet werden. Der Drehwinkel kann beispielsweise optisch erfasst werden.

Alternativ oder zusätzlich ist es jedoch von besonderem Vorteil, wenn eine Massenerfassung während des Schleudervorgangs über die Ermittlung des Trägheitsmomentes des angetriebenen Korbes erfolgt.

Dabei ist es von Vorteil, wenn die Masse indirekt über das Trägheitsmoment des mit Waben gefüllten Korbs errechnet wird, indem Drehzahl, Antriebsmoment des Antriebs und Winkelbeschleunigung des Korbes ermittelt werden.

Alternativ ist es so über eine indirekte Messung sehr einfach möglich, die Masse der Waben zu ermitteln, indem man die Veränderung der Beschleunigung bei einer Veränderung des Antriebsmomentes misst. Dadurch kann über den Bewegungsradius auf die Veränderung der Masse rückgeschlossen und der gefundene Wert an die Steuerungseinheit übergeben werden. Dieser Vorgang kann in zeitlichen Intervallen oder ständig erfolgen.

Bevorzugt können Drehzahl und Antriebsmoment über ein bekanntes Kennlinienfeld des Motors, einem gemessenen Strom, der Spannung und der Frequenz der Versorgungsspannung des Motors errechnet werden. Sowohl Strom und Spannung als auch die Frequenz sind durch den Frequenzumrichter ermittelbar.

Die Genauigkeit dieser indirekten Messung wird durch die Verwendung eines Direktantriebes zusätzlich erhöht. Durch die Verwendung eines Sensors zur Messung des Antriebsmomentes kann die Messgenauigkeit noch einmal erhöht werden. Da der Radius bekannt ist, auf dem die Waben kreisen, kann gemäß der Formel Trägheitsmoment = Masse mal Radius² die Masse bestimmt werden, wenn das Trägheitsmoment über die Messung der Winkelbeschleunigung bei bekanntem Drehmoment bestimmt wurde.

Bevorzugt wird die Veränderung der Drehzahl in Bezug auf die Gewichtsabnahme wenigstens einer Wabe auf einem Monitor grafisch angezeigt.

Der Imker, der seinen Honig gewinnen will, hat damit die Möglichkeit, den Schleuderprozess detailliert zu verfolgen.

Hinsichtlich der Honigschleuder wird die Aufgabe der Erfindung durch die Merkmale des Anspruchs 8 erfüllt und insbesondere dadurch, dass wenigstens eine Messvorrichtung zur Ermittlung der Masse wenigstens einer Wabe vorgesehen ist, der Messwert von der Messvorrichtung an die Steuerung weitergebbar ist und die Drehgeschwindigkeit des Korbes von der Steuerung auf Basis des Messwertes mit Hilfe des Motors einstellbar ist.

Wie bereits bei den analogen Verfahrensansprüchen beschrieben, ist der Vorteil einer solchen Honigschleuder, dass die Waben wegen ständig angepasster Drehzahl an ihr Gewicht nicht überlastet werden.

Es ist vorteilhaft, wenn die Korrelation zwischen Masse und zulässiger Drehgeschwindigkeit in der Steuerung hinterlegt ist.

Es ist sinnvoll, Grenzwerte für die Drehgeschwindigkeit in Abhängigkeit von dem Gewicht der Waben in der Steuerung festzuschreiben. Der Motor wird so durch die Steuerung immer mit der richtigen Drehzahl arbeiten.

Mit Vorteil ist vorgesehen, dass die Messvorrichtung wie bereits im Verfahrensteil beschrieben einen Kraftsensor oder einen Sensor zur Ermittlung des Trägheitsmomentes eines Korbes während des Schleudervorgangs umfasst.

Ferner ist es für den Imker von Vorteil, wenn die Honigschleuder einen Monitor zur Darstellung des Wabengewichts/der Wabengewichte aufweist oder mit einem solchen verbindbar ist.

Der Imker kann dadurch den Schleuderprozess und dessen Wirkung besser erkennen und gegebenenfalls durch Veränderung von Grenzwerten noch besser beeinflussen.

Dabei kann es sehr hilfreich sein, wenn es sich bei dem Monitor um eine unabhängige, mittels Funk oder Kabel verbundene Einheit handelt. Hier ist es bevorzugt, dass als Monitor das Display eines Smartphones, Tablets oder Laptops einsetzbar ist.

Im Folgenden soll die Erfindung anhand von Ausführungsbeispielen und Figuren weiter erläutert werden.

Dabei zeigen
Fig. 1 eine dreidimensionale Ansicht einer Selbstwendeschleuder gemäß der Erfindung,
Fig. 2 eine schematische Draufsicht auf eine Selbstwendeschleuder gemäß der Erfindung mit Vergleich zum Stand der Technik,
Fig. 3a und Fig. 3b eine Detaildraufsicht und eine Längsschnittdarstellung der Aufnahmenlagerung und
Fig. 4a und 4b eine Detaildraufsicht auf die Bewegung der Aufnahmen mit Überlappung

Die in den Figuren gezeigten Ausführungsbeispiele beziehen sich auf Honigschleudern 1 der Kategorie Selbstwendeschleudern. Die Erfindung ist
aber genauso gut auch bei einer Tangentialschleuder oder Radialschleuder nutzbar. Alle Merkmale der Ansprüche sind auf alle Darstellungen lesbar. In den Figuren beziehen sich unterschiedliche Ausführungsbeispiele nur auf eine unterschiedliche Anzahl der Aufnahmen 4, 4.1 für die Waben 20.

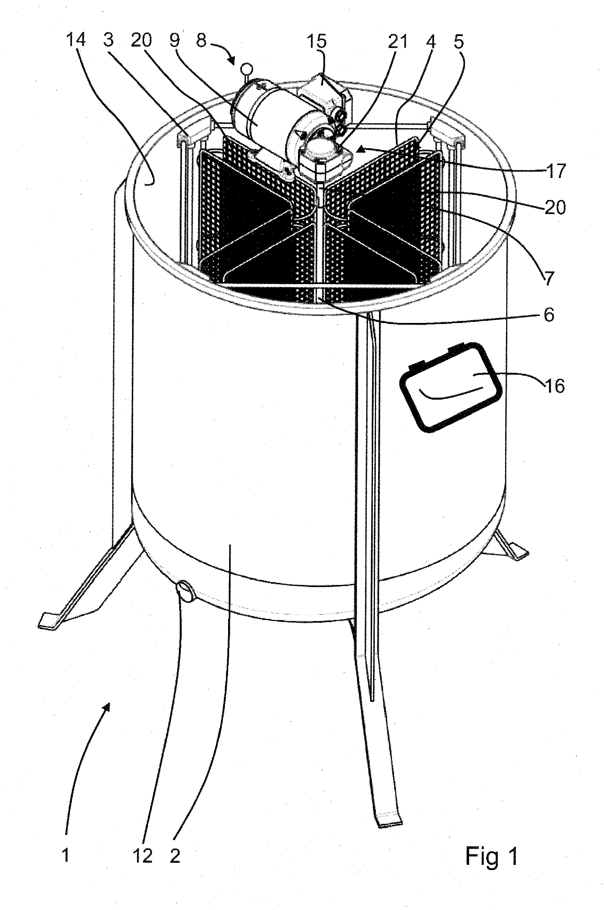

Um einen Überblick zu der erfindungsgemäßen Honigschleuder 1 zu erhalten, ist in Fig. 1 eine Selbstwendeschleuder mit vier Aufnahmen 4, 4.1 dreidimensional dargestellt. Aus Gründen der Übersichtlichkeit wurde der Deckel des Behälters 2 in der Fig. 1 weggelassen.

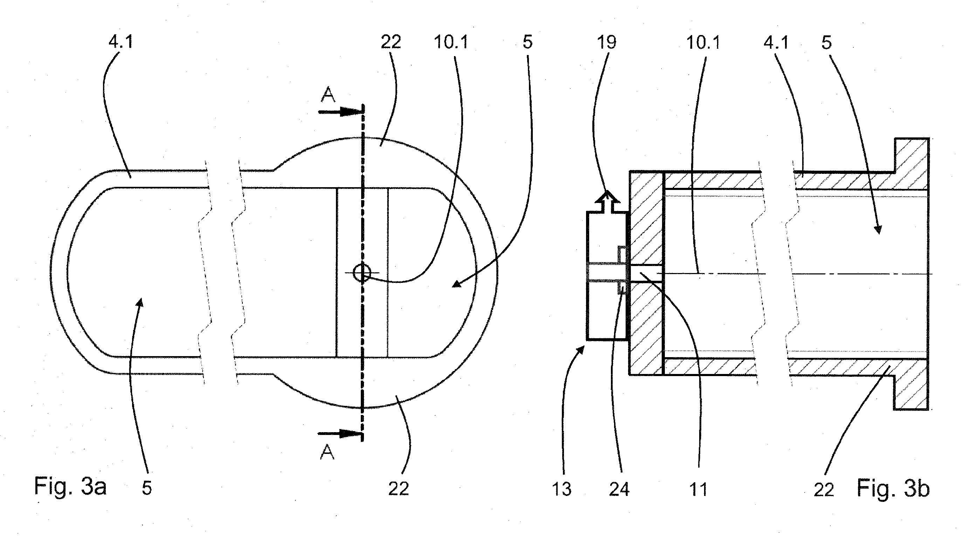

Im Inneren des Behälters ist ein drehbarer Korb 3 vorgesehen, der über einen Antrieb 8, der einen Motor 9 umfasst, in Rotation um die Rotationsachse 6 versetzt werden kann. An diesem Korb sind die Aufnahmen 4 vorzugsweise schwenkbar gelagert, so dass sie je nach Drehrichtung aufgrund der Zentrifugalkräfte eine andere Position einnehmen. Dabei befindet sich die Rotationsachse 10.1, 10.2 der Aufnahmen 4 näher an der Behälter-Innenwand 14 als an der Rotationsachse 6 des Korbs 3. Im Stillstand des Korbes 3 werden die Aufnahmen durch eine erst in Fig. 3 angedeutete Rückstelleineinrichtung 24 in die radiale Position im Korb 3 gebracht.

Die Aufnahmen 4 besitzen einen Aufnahmeraum 5 für Waben 20, die hier zur Vereinfachung schwarz dargestellt sind. Die Aufnahmen haben in diesem Ausführungsbeispiel eine Gitterstruktur, so dass Honig aus den Waben aufgrund von Zentrifugalkräften gegen die Behälter-Innenwand 14 herausgeschleudert werden kann, und zwar je nach Drehrichtung entweder von der ersten oder der zweiten Wabenseite.

Der Honig rinnt dann die Behälter-Innenwand 14 hinunter und kann aus der Auslassöffnung 12 entnommen werden. Verständlicherweise nimmt das Gewicht der Waben dabei ab, was Einfluss auf die Festigkeit der Wabe 20 als auch auf eine mögliche Unwucht des Korbes 3 hat.

Um das Gewicht der Waben während des Schleuderprozesses kontinuierlich zu überwachen, ist mindestens eine Messvorrichtung 17 vorgesehen, die Erkenntnisse über das Gewicht der Waben 20 gibt und diesen Messwert an eine Steuerungseinheit 15 des Antriebs 8 weitergibt, wodurch direkt steuerungstechnisch über den Motor 9 Einfluss auf die Drehzahl des Korbes genommen werden kann, um Schäden zu vermeiden. Man kann dementsprechend eine automatische Regelung der Drehzahl des Korbes einrichten, so dass eine kritische Grenze für die Zentrifugalkraft nicht überschritten wird.

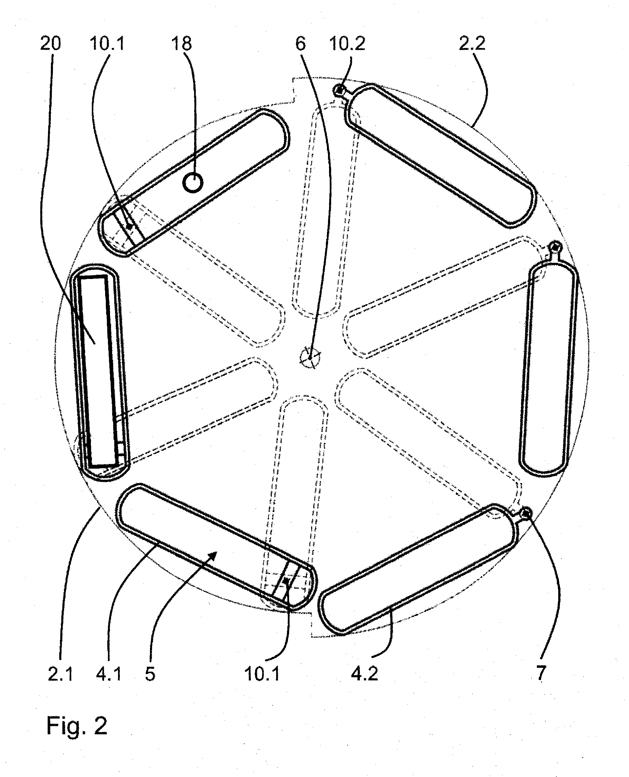

Die Messvorrichtungen 17 können mit unterschiedlichen physikalischen Messverfahren arbeiten. So ist beispielhaft in Fig. 1 ein Sensor 21 zur Ermittlung des Trägheitsmomentes vorgesehen, aus dessen Messwert sich das Gewicht der Wabe rechnerisch ermitteln lässt. Oder als alternatives oder zusätzliches Verfahren ist in Fig. 2 beispielhaft ein Kraft- oder Gewichtssensor 18 in der Aufnahme 4, 4.1 angebracht, der zum Beispiel als piezoelektronischer Aufnehmer seine Messdaten auch drahtlos übertragen kann. Oder als drittes aber für die Erfindung nicht abschließendes Beispiel ist in Fig. 3 ein Winkelmesser vorgesehen, der den Ausschlag der Aufnahme 4, 4.1 aufgrund der Zentrifugalkraft gegen die Kraft der Rückstelleineinrichtung 24 bestimmt und somit auch das Gewicht anzeigen kann. Der Ausschlagwinkel kann auch über optoelektronische Verfahren ermittelt werden.

In jedem dieser möglichen Messverfahren zur Bestimmung der Gewichtsänderung der Waben können vor einem Schleudervorgang die Sensoren auf den leeren oder den mit Waben in den Aufnahmen gefüllten Korb kalibriert werden.

Bevorzugt werden die Gewichts- bzw. Massenveränderungen von mindestens zwei oder sogar allen Waben verfolgt. Dann wird das System sicherer und außerdem können auch Unwuchten des Korbes besser erfasst werden.

In der Steuereinheit 15 ist eine maximale Drehzahl in Abhängigkeit des Wabengewichtes bzw. der Wabengewichtsverteilung hinterlegt. Auf einem Monitor 16 kann der Betreiber der Honigschleuder beispielsweise den genauen Verlauf der Drehzahlveränderung verfolgen. Der Monitor könnte auch durch ein Tablet oder Smartphone gebildet sein.

In der Fig. 2 ist in sehr anschaulicher Art und Weise bei einer Selbstwendeschleuder mit sechs Aufnahmen ein weiterer und zusätzlicher großer Vorteil sichtbar gemacht worden, dadurch, dass man die otationsachse 10.1 der Aufnahme (4, 4.1) durch den Aufnahmeraum (5) der Aufnahmen (4, 4.1) verlaufen lässt. Dies ist explizit auf der linken Bildhälfte dargestellt. Im Gegensatz dazu zeigt die rechte Bildhälfte, wie die Rotationsachse 10.2 im Stand der Technik angeordnet war. Um in einheitlicher Sprache zu sprechen haben die Teile gemäß der Erfindung hier den Index ".1" und die Teile aus dem Stand der Technik den Index ".2" erhalten.

Durch die Versetzung der Rotationsachse 10.1 in den Bereich durch den Aufnahmeraum 5 kann man den Behälter 2.1 mit deutlich kleinerem Durchmesser bauen, als wenn man die Rotationsachse 10.2 am äußersten Ende der Aufnahme 4.2 und außerhalb des Aufnahmeraums unterbringt. In der Realität heißt das für den Behälter einer Selbstwendhonigschleuder mit sechs Aufnahmen, dass sich der Durchmesser von beispielsweise 770 mm auf 680 mm verringert. Das vermindert den Platzbedarf und den Materialbedarf (Edelstahl) erheblich. In gestrichelter Weise ist die Ruhestellung der Aufnahmen 4.1, 4.2 gezeigt.

Fig. 3a und Fig. 3b zeigen, wie es möglich gemacht wird, statt einer durchgängigen Drehachse 7 eine Art Hohlwelle 22 zu nutzen, denn eine durchgängige Drehachse wäre nicht möglich, da die Aufnahmen 4, 4.1 nicht mehr mit Waben befüllt werden könnten. Dazu zeigt Fig. 3a eine geschnittene Draufsicht auf die Aufnahme 4 und die Hohlwelle 22 und Fig. 3b einen Schnitt A-A durch die Hohlwelle 22 und den Aufnahmeraum 5.

Man erkennt, dass das Drehlager 13 und die Drehachse 11 unterhalb des Aufnahmeraums 5 der Aufnahme 4.1 angeordnet ist, so dass die Rotationsachse 10.1, der Aufnahme 4.1 im Zentrum der Hohlwelle 22 liegt. Dadurch liegt die Rotationsachse etwa gleich weit von zwei Längsseiten und einer Stirnseite der Aufnahme 4.1 entfernt.

Die in dem Drehlager 13 enthaltene Rückstelleinrichtung 24, beispielsweise eine Feder, und die Winkelmesseinrichtung 19 (nur durch einen Pfeil für das abgegebene Messsignal symbolisiert) sind nur angedeutet.

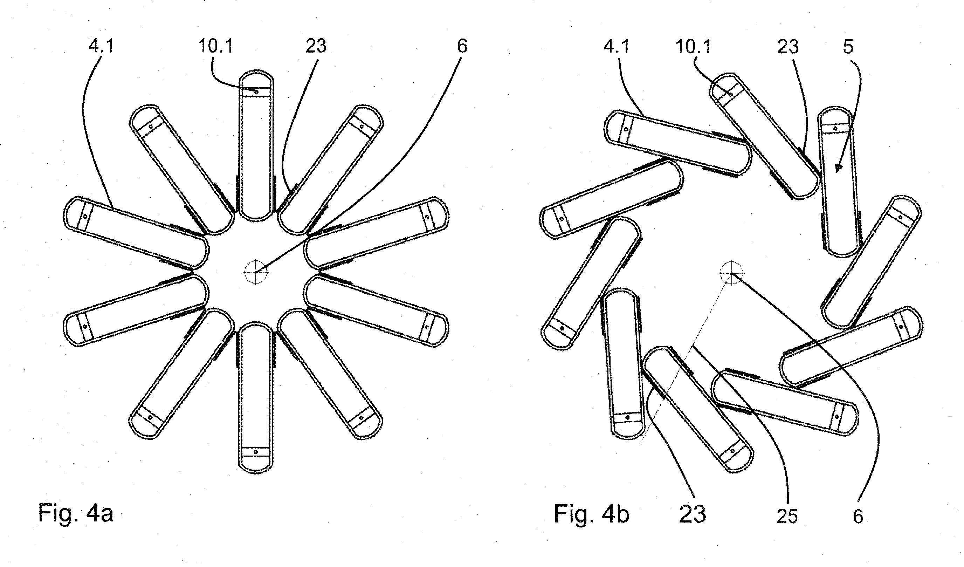

Schließlich zeigen Fig. 4a und Fig. 4b schematisch die gleiche Selbstwendeschleuder mit zehn Aufnahmen 4.1 in stehendem (Fig. 4a) und in drehendem (Fig. 4b) Zustand. Alle Aufnahmen drehen um die Rotationsachse 6 des Korbes, der hier zur Vereinfachung und zum besseren Verständnis nicht dargestellt ist. Hier wurden die Rotationachsen 10.1 enger zueinander angeordnet, so dass ihr Abstand geringer ist als die längste Ausdehnung des Aufnahmeraums 5. Das hat zur Folge, dass die Aufnahme 4.1 auch bei einem durch die Zentrifugalkraft bedingten vollständigen Schwenk nicht mit beiden Enden den gleichen Abstand zur Behälterinnenwand einnehmen kann, sondern sich benachbarte Aufnahmen ein Stück überlappen. Damit der Honig aus den Waben nicht gegen die der Behälterwand abgewandten Seite der benachbarten Aufnahme geschleudert wird, sind im Überlappungsbereich Ableitbleche 23 angeordnet.

Durch die Darstellung der radialen Hilfsline 25, die eine Zentrifugalkraftrichtung ausgehend von der Rotationsachse 6 darstellt, wird deutlich, dass das Ableitblech 23 bezogen auf die Hilfsline genau dort an der Hilfslinie endet, wo die Hilfslinie das Ende der nächsten Aufnahme passiert. Der ausgeschleuderte Honig kann sich also nicht an der nächsten Aufnahme, die näher an der Behälterinnenwand liegt, absetzen. Das wird deshalb möglich, weil das Ableitblech nur den Teil der Aufnahme 4.1 abdeckt, wo sich im Aufnahmeraum vornehmlich das (Holz-)Rähmchen der Wabe befindet.

Mit dieser Überlappung der Aufnahmen 4.1, die zusätzlich zur Verlegung der Rotationsachse 10.1 jeder Aufnahme 4.1 erfolgt, kann der im vorangehenden Beispiel mit 6 Aufnahmen pro Selbstwendeschleuder notwendige Durchmesser des Behälters tatsächlich beibehalten werden, so dass die Ausbeute pro Schleudergang (noch einmal) um über 60% erhöht wird.

**Bezugszeichenliste**

| | |
|---|---|
| 1 | Honigschleuder |
| 2, 2.1, 2.2 | Behälter |
| 3 | Korb |
| 4 | Aufnahme |
| 4, 4.1, 4.2 | Aufnahme |
| 5 | Aufnahmeraum |
| 6 | Rotationsachse Korb |
| 7 | Drehachse Korb |
| 8 | Antrieb |
| 9 | Motor |
| 10 | Rotationsachse Aufnahme |
| 10.1, 10.2 | Rotationsachse Aufnahme |
| 11 | Drehachse Aufnahme |
| 12 | Auslassöffnung |
| 13 | Drehlager |
| 14 | Behälter- Innenwand |
| 15 | Steuerungseinheit |
| 16 | Monitor |
| 17 | Messvorrichtung |
| 18 | Gewichtssensor, Kraftsensor |
| 19 | Winkelmesseinrichtung |
| 20 | Wabe |
| 21 | Sensor zur Ermittlung des Trägheitsmomentes |
| 22 | Hohlwelle |
| 23 | Ableitblech |
| 24 | Rückstelleineinrichtung |
| 25 | Hilfslinie |

## Patentansprüche

1. Verfahren zum Ausschleudern von Waben (20) in einem Behälter (2), in dem Waben in Aufnahmen (4) eines drehbaren Korb (3) mit einer Rotationsachse (6) eingesetzt werden, danach der Korb (3) über einen Motor (9) in Rotation versetzt wird, so dass der Honig aufgrund der Zentrifugalkraft aus den Wabenzellen herausgetrieben wird und an einer Behälterwand (14) zu einer Auslassöffnung (12) herunterrinnt, wo der Honig entnommen wird, und wobei die Drehgeschwindigkeit des Korbes (3) über eine Steuerungseinheit (15) auf einen Wert eingestellt wird, mit dem die Waben durch die auftretende Zentrifugalkraft nicht beschädigt werden,
**dadurch gekennzeichnet, dass**
die Masse wenigstens einer Wabe (20) innerhalb des Behälters (3) mittels einer Messvorrichtung (17) ermittelt wird, das Ergebnis an die Steuerungseinheit (15) weitergeleitet wird und die Steuerungseinheit automatisch die Drehgeschwindigkeit über den Motor (9) so einstellt, dass eine kritische Grenze für die Zentrifugalkraft nicht überschritten wird.

2. Verfahren gemäß Anspruch 1, **dadurch gekennzeichnet, dass** eine Massenänderung von wenigstens zwei Waben ermittelt wird.

3. Verfahren nach Anspruch 1 oder 2, **dadurch gekennzeichnet, dass** die Masse aller Waben vor und/oder während und/oder nach dem Schleudervorgang ermittelt wird.

4. Verfahren gemäß einem der Ansprüche 1 bis 3, **dadurch gekennzeichnet, dass** die Masse während des Schleudervorgangs ständig über wenigstens einen Gewichtssensor (18) ermittelt wird.

5. Verfahren gemäß einem der Ansprüche 1 bis 4, **dadurch gekennzeichnet, dass** die Masse bei einer Selbstwendeschleuder über die Winkelveränderung der Aufnahme (4) in Abhängigkeit von der Drehzahl erfasst wird.

6. Verfahren gemäß einem der Ansprüche 1 bis 5, **dadurch gekennzeichnet, dass** eine Massenerfassung während des Schleudervorgangs über die Ermittlung des Trägheitsmomentes des angetriebenen Korbes (3) erfolgt.

7. Verfahren gemäß Anspruch 6, **dadurch gekennzeichnet, dass** die Masse indirekt über das Trägheitsmoment des mit Waben (20) gefüllten Korbs (3) errechnet wird, indem Drehzahl, Antriebsmoment des Antriebs (8) und Winkelbeschleunigung des Korbes (3) ermittelt werden.

8. Verfahren gemäß einem der Ansprüche 1 bis 7, **dadurch gekennzeichnet, dass** die Veränderung der Drehzahl in Bezug auf die Gewichtsabnahme wenigstens einer Wabe auf einem Monitor (16) grafisch angezeigt wird.

9. Honigschleuder, insbesondere zur Durchführung des Verfahrens gemäß einem der Ansprüche 1 bis 7, mit einem Behälter (2), in dem ein drehbarer Korb (3) mit Aufnahmen (4) für Honigwaben und einer Rotationsachse (6) über einen Motor (9) in Rotation versetzbar ist, einer Auslassöffnung (12), aus der der ausgeschleuderte gewonnene Honig entnehmbar ist und einer Steuerungseinheit (15), mit der die Drehzahl
des Motors einstellbar ist,
**dadurch gekennzeichnet, dass**
wenigstens eine Messvorrichtung (17) zur Ermittlung der Masse
wenigstens einer Wabe (20) vorgesehen ist, der Messwert von der Messvorrichtung (17) an die Steuerung (15) weitergebbar ist und die Drehgeschwindigkeit des Korbes (3) von der Steuerung (15) auf Basis des Messwertes mit Hilfe des Motors (9) einstellbar ist.

10. Honigschleuder gemäß Anspruch 9, **dadurch gekennzeichnet, dass** die Korrelation zwischen Masse und zulässiger Drehgeschwindigkeit in der Steuerung (15) hinterlegt ist.

11. Honigschleuder gemäß Anspruch 9 oder 10, **dadurch gekennzeichnet, dass** die Messvorrichtung (17) einen Kraftsensor (18) umfasst.

12. Honigschleuder gemäß Anspruch 9 oder 10, **dadurch gekennzeichnet, dass** die Messvorrichtung (17) einen Sensor zur Ermittlung des Trägheitsmomentes (21) eines Korbes (3) während des
Schleudervorgangs umfasst.

13. Honigschleuder gemäß einem der Ansprüche 9 bis 12, **dadurch gekennzeichnet, dass** die Honigschleuder einen Monitor (16) zur Darstellung des Wabengewichts/der Wabengewichte aufweist oder mit einem solchen verbindbar ist.

14. Honigschleuder gemäß Anspruch 13, **dadurch gekennzeichnet, dass** als Monitor das Display eines Smartphones, Tablets oder Laptops einsetzbar ist.
